**Europäisches Patentamt**

**European Patent Office**

**Office européen des brevets**

(19)

(11) Veröffentlichungsnummer : **0 028 386 B2**

# (12) NEUE EUROPÄISCHE PATENTSCHRIFT

(45) Veröffentlichungstag der neuen Patentschrift :
**19.08.92 Patentblatt 92/34**

(51) Int. Cl.$^5$ : **B60S 1/08,** // H02P3/00, H02P7/00

(21) Anmeldenummer : **80106604.4**

(22) Anmeldetag : **28.10.80**

(54) **Steueranordnung für eine Wischanlage für Kraftfahrzeugscheiben.**

(30) Priorität : **02.11.79 DE 2944224**

(43) Veröffentlichungstag der Anmeldung :
**13.05.81 Patentblatt 81/19**

(45) Bekanntmachung des Hinweises auf die
Patenterteilung :
**19.02.86 Patentblatt 86/08**

(45) Bekanntmachung des Hinweises auf die
Entscheidung über den Einspruch :
**19.08.92 Patentblatt 92/34**

(84) Benannte Vertragsstaaten :
**DE FR GB IT SE**

(56) Entgegenhaltungen :
**DE-A- 928 625**

(56) Entgegenhaltungen :
DE-A- 966 287
DE-A- 2 022 823
DE-A- 2 112 254
DE-A- 2 357 541
DE-A- 2 436 302
DE-A- 2 742 888
FR-A- 2 122 771
FR-A- 2 443 353
GB-A- 1 495 487
US-A- 3 487 282
US-A- 3 529 227

(73) Patentinhaber : **ROBERT BOSCH GMBH**
**Postfach 30 02 20**
**W-7000 Stuttgart 30 (DE)**

(72) Erfinder : **Steinmann, Helmut, Ing.grad.**
**Höllhäuserweg 66**
**W-7570 Baden-Baden (DE)**

**EP 0 028 386 B2**

Jouve, 18, rue Saint-Denis, 75001 PARIS

**Beschreibung**

Die Erfindung geht aus von einer Steueranordnung nach der Gattung des Hauptanspruches, wie sie aus der DE-A-24 36 302 bekannt geworden ist. Diese Druckschrift zeigt eine elektrische Scheibenwischanlage, insbesondere für ein Kraftfahrzeug, welche einen elektromechanischen Wischerschalter mit zwei beweglichen Schaltkontakten und jeweils vier zugeordneten feststehenden Schaltkontakten aufweist zum Schalten der verschiedenen Betriebszustände eines Wischermotors mit drei Bürsten für zwei verschiedene Wischgeschwindigkeiten. Dem Wischerschalter ist eine Zeitsteuereinrichtung zugeordnet, welche im Intervallbetrieb bei Kontaktierung der zugeordneten festen Schaltkontakte aktiviert wird und Wischimpulse über den Wischerschalter auf den Wischermotor gibt. Ein mechanischer, mit dem Wischermotor gekoppelter Endlagenschalter bremst den Motor durch Kurzschließen ab, indem er einen Stromkreis über den Wischerschalter schließt. Eine derartige Anordnung erfordert einen großen elektromechanischen Schaltungsaufwand und eine Mehrzahl hochbelasteter elektrischer Verbindungen zwischen dem Wischerschalter und der Zeitsteuereinrichtung einerseits und sowie zwischen dem Wischerschalter, dem Wischermotor und dem Endlagenschalter andererseits. Ferner sind derartige Anordnungen einerseits hinsichtlich der Zahl der möglichen Steuerfunktionen und andererseits hinsichtlich der Verschiedenartigkeit der Steuerungsmöglichkeiten an relativ enge Grenzen gebunden. Außerdem sind mechanische Steuerungen einem beachtlichen Verschleiß unterworfen, was zu Störungen und Ausfällen führen kann.

Aus der DE-C-21 12 254 ist ein Antrieb für Scheibenwischer von Kraftfahrzeugen bekannt, welcher als Endschalter einkontaktloses Schaltelement aufweist, in dessen Steuerkreis ein magnetisch beeinflußbares Bauelement liegt. Dieses Bauelement ist als magnetfeldabhängiger Widerstand im Steuerkreis des kontaktlosen Schaltelementes ausgebildet. Das Magnetfeld wird von einem Permanentmagneten erzeugt, welcher an einem Getrieberad eines zwischen/Wischermotor und umlaufender Antriebskurbel geschalteten Untersetzungsgetriebes befestigt ist.

Weiterhin ist es aus der US-A-3 487 282 bekannt, die Wischanlage für Kraftfahrzeugscheiben elektronisch zu steuern, wobei einem elektrischen Wischermotor eine Endlagenschaltvorrichtung und eine elektronische Schaltung zur Festlegung verschiedener Wischgeschwindigkeiten und/oder eine elektronische Intervall-Wischschaltung zugeordnet sind. Die bekannte Endlagenschaltvorrichtung besitzt eine Bremsschaltung zum Kurzschließen des Wischermotors und somit zum Abbremsen desselben in der Parkstellung.

Der Erfindung liegt die Aufgabe zugrunde, eine Steueranordnung für eine Wischanlage für -Kraftfahrzeugscheiben dahingehend zu verbessern, daß mit möglichst geringem konstruktivem und schaltungstechnischem Aufwand ein störungsfreier Betrieb der Wischanlage ermöglicht wird.

Diese Aufgabe wird durch die Merhmale der Anspruchs 1 gelöst

Vorteile der Erfindung

Die erfindungsgemäße Steueranordnung mit den Merkmalen des Hauptanspruches hat gegenüber bekannten Steueranordnungen den Vorteil, daß eine elektronische Lösung für eine Steueranordnung gefunden worden ist, welche einen einfachen, kostengünstigen und störungssicheren Aufbau der Steueranordnung bei hoher Präzision der durchzuführenden Schaltvorgänge und wartungsfreiem Betrieb ermöglicht.

Durch die Einbeziehung einer kontaktlosen Endlagenschaltung in die elektronische Schaltung wurde zusätzlich eine wesentliche Vereinfachung der bisher üblichen Steuerung ermöglicht. Mechanische Schleifkontakte entfallen dann vollständig, da das Signal der Parkstellung der Wischanlage vorzugsweise von einem beweglichen Permanentmagneten und einer feststehenden Aufnehmerspule oder einem elektronischen Sensor erzeugt wird, beispielsweise einem Hall-IC. Die zur Steuerung ohnehin erforderlichen Leistungshalbleiter können außerdem als Motorschalter benutzt werden. Hierdurch läßt ,sich eine getrennte Bremsleitung einsparen und es sind nur dünne Zuleitungen zwischen Schalter und Wischermotor erforderlich, welche lediglich für Steuerströme ausgelegt sein müssen. Ferner ergeben sich einfachere Schalterkontakte.

Durch die in den Unteransprüchen aufgeführten Massnahmen sind vorteilhafte Weiterbildungen und Verbesserungen der im Hauptanspruch angegebenen Steueranordnung möglich. So ist für die Wartungsfreiheit der Anlage insbesondere die zuvor bereits erwähnte. Verwendung von Permanenlmagneten als Signalgeber zweckmässig, wobei das Signal für die Parkstellung von einer mit dem Wischermotor mechanisch gekoppelten Steuerscheibe erzeugt wird, welche einem beweglichen Permanentmagneten aufweist, der mit einem feststehenden Aufnehmer zusammenarbeitet. Der Intervall-Wischbetrieb wird vorteilhafterweise durch eine Impulsschaltung mil niedrigem Tastverhältnis bewirkt, wobei das Einschaltsignal über eine Torschaltung und eine Endstufe auf den Wischermotor durchschaltbar ist.

Weiterhin ist es in sehr vorteilhafter Weise möglich, eine Blockierschutzvorrichtung für den Wischermotor vorzusehen, welche beim Überschreiten eines vorgegebenen Motorstromes die Endstufe zunächst abschaltet

EP 0 028 386 B2

ohne die Bremsschaltung zu aktivieren und anschliessend mittels eines Taktgebers in regelmässigen Zeitabständen durch erneutes kurzzeiliges Einschallen der Endstufe das Fortbestehen der Blockierung überprüft. Hierdurch erreicht man eine Stromersparnis im Blockierfall. Ausserdem ist eine Grössen- und Gewichtsersparnis des Motors möglich durch günstigere Auslegung desselben, da für den Blockierfall eine verringerte thermische Belastung angenommen werden kann. Der Motor erhält ausserdem ein besseres Losreissverhalten im Blockierfall durch die Impulsschaltung sowie ein höheres Losreissmoment im Blockierbetrieb, da die auftretende Erwärmung geringer und somit die Verluste im Motor niedriger sind.

Zeichnung

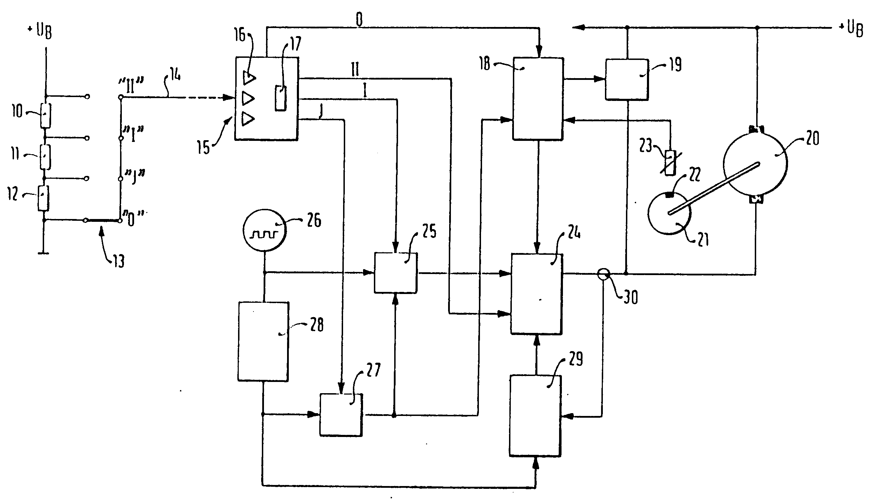

Ein Ausführungsbeispiel der Erfindung ist schematisch in der beigefügten Zeichnung dargestellt und in der nachfolgenden Beschreibung näher erläutert. Die Figur zeigt ein Blockschaltbild, wobei die Einzelbausteine aus an sich bekannten Schaltgruppen bestehen und vom Fachmann in verschiedener Weise ohne Schwierigkeiten realisierbar sind.

Beschreibung des Ausführungsbeispieles

In der Figur sind zwischen einer Spannungsquelle $U_B$ und Massepotential drei Widerstände 10, 11 und 12 eingeschaltet, zwischen denen jeweils Abgritte zu einem Schalter 13 heräusgeführt sind. Der Schalter besitzt die Stellungen « O », « J », « I » und « II » Hierbei bezeichnet « O » die AUS-Stellung, « J » den Inlervall-Wischbetrieb, « I » eine erste, niedrigere Drehzahlstufe und « II » eine zweite, höhere Drehzahtstufe des Motors.

Der Schalter 13 ist über eine Leitung 14 mit einer Leitungslogik 15 verbunden, welche Komparatoren zur Ermittlung der Schaltstufe analog zur abgegrittenen Spannung sowie eine Auswahllogik für eine entsprechende Leitung besitzt Die Leitungslogik kann beispielsweise von einem Pegeldetektor mit der Typenbezeichnung TL 489 gebildet werden, wie er in handelsüblicher Bauweise erhältlich ist. Ein derartiger Pegeldektor besitzt Komparatoren und ein Referenzspannungsnetz, wobei ein erster Ausgang-geschaltet wird wenn die Eingangsspannung eine gewisse Schwelle überschreitet und die weiteren Ausgänge beim Überschreiten weiterer Spannungsintervalle geschaltet werden.

Ausgangsseitig sind an die Leitungslogik 15 vier Leitungen angeschlossen, welche entsprechend den Stellungen des Schalters 13 mit J, I, II und O bezeichnet sind Die Leitung O tührt zu einer Bremslogik 18, welche ihrerseits eine Bremsschaltung 19 ansteuert, durch die ein Wischermotor 20 kurzschliessbar ist. Der Wischermotor 20 und die zugeordnete Bremsschaltung 19 liegen ebenfalls an der Versorgungsspannung $U_B$. Mit dem Wischermotor 20 ist mechanisch eine Steuerscheibe 21 gekoppelt, mit der ein Permanentmagnet 22 umläuft, welcher seinerseits in einer Aufnehmerspule 23 ein Signal erzeugt und mit diesem Signal die Stellung des Motors in der sogenannten Parkstellung der Scheibenwischer anzeigt. Das von der Autnehmerspule 23 aufgenommene Signal wird der Bremslogik 18 zugeführt.

Die Leitung II führt direkt von der Leitungslogik 15 zu einer Endstufe 24, während die Leitüng I von der Leitungslogik 15 zunächst zu einem ersten Tor 25 führt, an dessen Eingang ein Taktgenerator 26 liegt und dessen Ausgang mit der Endstufe 24 verbunden ist. Die Leitung J führt von der Leitungslogik 15 zu einem zweiten Tor 27, welches eingangsseitig weiterhin über einen Frequenzteiler 28 mit dem Taktgenerator 26 und ausgangsseitig einerseits mit dem eisten Tor 25 und andererseits mit der Bremslogik 18 verbunden ist. Ausserdem ist noch eine Stromkontrollschaltung 29 vorgesehen, welche Teil einer Blockierschutzvorrichtung ist. Diese Stromkontrollschaltung 29 ist eingangsseitig einerseits über den Frequenzteiler 28 an den Taktgenerator 26 und andererseits an einen Strommesser 30 angeschlossen, welcher im Versorgungsstromkreis des Wischermotors 20 liegt. Der Ausgang der Stromkontrollschaltung 29 ist mit der Endstute 24 verbunden.

Die erfindungsgemässe Steueranordnung arbeitet folgendermassen:

Durch das Anlegen der Versorgungsspannung $U_B$ an die Widerstandsanordnung 10, 11, 12 wird je nach Stellung des Schalters 13 über die Leitung 14 eine definierte Spannung an die Leitungslogik 15 angelegt. Die Widerstände 10, 11, 12 können beispielsweise gleich gross sein und ergeben somit vier verschiedene Potentiale, wobei ein Potential von 0 Volt der « Aus »-Stellung entspricht, ein Potential von 0,33 $U_B$ der Intervallschaltung (J), ein Potential von 0,67 $U_B$ der Stufe « I » und das volle Versorgungspotential Um der Schaltstufe « II ». Diese verschiedenen Potentiale sind über eine einzige Leitung 14 auf die Leitungslogik 15 übertragbar, wo wiederum mittels dreier Komparatoren 16 und nachgeschalteter Auswahllogik 17 eine Umsetzung auf diskrete Signale für Intervallbetrieb, Stufe I, Stufe II und Bremsen erfolgt.

Der Wischermotor 20 ist für die höhere Drehzahlstufe II ausgelegt. Die reduzierte Drehzahl gemäss Stufe I wird durch eine Impulsschaltung mit definiertem Tastverhältnis erzeugt. Dazu dient ein Taktgenerator 26, dessen Taktfrequenz vorzugsweise ausserhalb des Hörbereiches Liegt zur Vermeidung von Geräuschanregungen

3

im Motor. Das Ausgangssignal des Taktgenerators 26 wird beim Anwählen der Stufe I oder des Intervallbetriebes J von dem ersten Tor 25 durchgeschaltet auf die Endstufe 24 und den Wischermotor 20. Die Impulsschaltung für Intervallbetrieb wird im gezeichneten Ausführungsbeispiel von dem vorhandenen Taktgenerator 26 über einen Frequenzteiler 28 abgeleitet, welcher eine Logik zur Auswahl eines geeigneten Tastverhältnisses besitzt. Statt-dessen könnte für den Intervallbetrieb jedoch auch ein selbständiger, in der Zeichnung nicht dargestellter Taktgenerator benutzt werden. Das entsprechende Signal wird beim Anwählen des Intervall-Wischbetrieb J über das zweite Tor 27 zum ersten Tor 25 und von diesem zur Endstute 24 durchgeschaltet. Gleichzeitig wird im Intervallbetrieb vom zweiten Tor 27 aus die Bremslogik 18 betätigt. Zum Einschalten des Wischermotors in seiner höchsten Drehzahlstute II wird die auch in der Stufe I und im Intervallbetrieb benötigte Endstufe 24 direkt zum Wischermotor 20 durchgeschaltet.

Beim Intervallbetrieb und beim Ausschalten des Wischermotors kommt eine Endlagenschaltvorrichtung zur Wirkung, welche zusätzlich eine Bremslogik 18 und eine Bremsschaltung 19 erfordert. Das Abschaltsignal wird in der Bremslogik 18 aufbereitet. Hierzu werden die Informationen aus Ansteuersignal aus der Leitungslogik 15, aus der momentanen Wischarmposition über die Autnehmerspule 23 und gegebenenfalls aus der Intervallschaltung J so bewertet, dass bei jedem Abschaltbefehl unabhängig von dessen Ursprung der Wischermotor 20 zunächst eingeschaltet bleibt, bis die Parkstellung erreicht ist. In diesem Augenblick wird der Wischermotor abgeschaltet und die Bremsschaltung 19 aktiviert, welche den Wischermotor 20 kurzschliesst.

Eine Ausgestaltung der erfindungsgemäßen Steueranordnung umfaßt eine Blockierschutzvorrichtung für den Wischermotor, welche beim Überschreiten eines vorgegebenen Motorstromes die Endstufe 24 zunächst abschaltet ohne die Bremsschaltung 19 zu aktivieren. Hierzu wird mittels des Strommessers 30 der vom Wischermotor 20 aufgenommene Strom gemessen und beim Anstieg des Motorstromes über einen vorgegebenen Wert von der Stromkontrollschaltung 29 die Endstufe 24 abgeschaltet. Anschliessend wird mittels eines Taktgebers, wozu im vorliegenden Fall der Taktgene- rator 26 und der Frequenzteiler 28 benutzt werden, nach regelmässigen, vorbestimmten Zeitabständen durch kurzzeitiges Einschalten der Endstufe 24 geprüft, ob die Blockierung des Motors 20 noch besteht. Ist der Motor 20 noch blockiert, so wird vom Stromsignal über den Strommesser 30 sofort wieder abgeschaltet. Ist die Blockierung dagegen aufgehoben, so läuft der Wischermotor 20 wieder seinem ursprünglichen Steuerbefehl entsprechend weiter. Eine eingebaute, in der Prinzipschaltung nicht gezeigte Verzögerungsschaltung sorgt dafür, dass der Anlaufstrom des Wischermotors 20 nicht als Blockierstrom identifiziert werden kann.

## Patentansprüche

1. Steueranordnung für eine Wischanlage für Kraftfahrzeugscheiben, mit einem elektrischen Wischermotor (20), einer vom Wischermotor (20) gesteuerten Endlagenschaltvorrichtung mit einer Bremsschaltung (19) zum Kurzschließen des Wischermotors (20) und mit einem Stufenschalter (13) mit mehreren Stellungen zur Festlegung zweier Wischgeschwindigkeiten ("I", "II"), einem Intervall-Wischbetrieb ("J") und einer AUS-Stellung ("O"),
dadurch gekennzeichnet,
daß der Wischermotor (20) bei der zweiten, höheren Drehzahlstufe ("II") über eine Leistungshalbleiter-Endstufe (24) an die Versorgungsspannung ($U_B$) dauernd durchgeschaltet ist, während der Wischermotor (20) bei der ersten, niedrigeren Drehzahlstufe ("I") über einen die Leistungshalbleiter-Endstufe (24) durch Impulsbetrieb mit entsprechendem Tastverhältnis steuernden Taktgenerator (26) an die Versorgungsspannung ($U_B$) durchgeschaltet ist,
daß der Stufenschalter (13) über eine einzelne Leitung (14) mit einer Leitungslogik (15) verbunden ist, welche aus einem der Stellung des Stufenschalters (13) entsprecheden Spauungswert (Widerstände 10, 11, 12) die ausgewählte Schalterstellung ("O", "J", "I", "II") ermittelt und mittels einer Auswahllogik (17) diejenige Ausgangsleitung (O, J, I, II) schaltet, welche der Stellung des Stufenschalters (13) entspricht,und entweder die zweite, höhere Drehzahlstufe ("II") des Wischermotors (20) aktiviert oder eine Bremslogik (18) mit nachgeordneter Bremsschaltung (19) für den Wischermotor (20) im der AUS-Stellung oder eine Impulsschaltung (26,28) für den Intervallbetrieb ("J") oder die Impulsschaltung (26) für die erste niedrigere Drehzahlstufe ("I") aktiviert,
und daß die Bremsschaltung (19) als Leistungshalbleiter ausgebildet ist und die Bremslogik (18) die Bremsschaltung (19) zum Stillsetzen des Wischermotors (20) in der AUS-Stellung ("O") bzw. in der Intervallstellung ("J") des Stufenschalters (13) dann einschaltet, wenn ihr einerseits das Signal zum Stillsetzen des Wischermotors (20) in der AUS-Stellung ("0") bzw. in der Intervallstellung ("J") des Stufenschalters (13) und andererseits ein Signal für das Erreichen der Parkstellung (22, 23) der Wischer zugeführt werden, welches von einer kontaktlosen Endlagenschaltung erzeugt wird.

2. Steueranordnung nach Anspruch 1, dadurch gekennzeichnet, dass das Signal für die Parkstellung von einer mit dem Wischermotor (20) mechänisch gekoppelten Steuerscheibe (21), insbesondere von einem beweglichen Permanentmagneten (22), und einem feststehenden Aufnehmer (23) erzeugt wird.

3. Steueranordnung nach Anspruch 1 oder 2, dadurch gekennzeichnet, dass der Intervall-Wischbetrieb durch eine Impulsschaltung mit niedrigem Tastverhältnis bewirkt wird, wobei das Einschaltsignal über eine Torschaltung (27, 25) und eine Endstufe (24) auf den Wischermotor (20) durchschaltbar ist.

4. Steueranordnung nach einem der vorhergehenden Ansprüche, gekennzeichnet, durch eine Blockierschutzvorrichtung für den Wischermotor (20), welche beim Überschreiten eines vorgegebenen Motorstromes die Endstufe (24) zunächst abschaltet ohne die Bremsschaltung (19) zu aktivieren und anschliessend mittels eines Taktgebers (26, 28) in regelmässigen Zeitabständen durch erneutes kurzzeitiges Einschalten der Endstufe (24) das Fortbestehen der Blockierung überprüft.

## Claims

1. Control arrangement for a wiper system for motor vehicle windows, having an electrical wiper motor (20), a limit-position switching device, which is controlled by the wiper motor (20) and has a brake circuit (19) for short-circuiting the wiper motor (20), and having a stepping switch (13), with a plurality of positions for defining two wiper speeds ("I", "II"), an intermittent wiper operation ("J") and an OFF-position ("O"),
 characterised in that
 the wiper motor (20) is permanently connected through to the supply voltage ($U_B$), via a power semiconductor output stage (24), during the second, higher speed step ("II"), while the wiper motor (20) is connected through to the supply voltage ($U_B$) via a clock generator (26), which controls the power semiconductor output stage (24) by means of pulse operation at a suitable duty cycle, during the first, lower speed step ("I"),
 in that the stepping switch (13) is connected via a single line (14) to line logic (15) which determines the selected switch position ("O", "J", "I", "II") from a voltage level (resistors 10, 11, 12) corresponding to the position of the stepping switch (13), and, by means of selection logic (17), connects that output line (O, J, I, II) which corresponds to the position of the stepping switch (13), and activates either the second, higher speed step ("II") of the wiper motor (20) or activates brake logic (18), with a brake circuit (19) arranged downstream, for the wiper motor (20) in the OFF position, or activates a pulse circuit (26, 28) for the intermittent operation ("J") or the pulse circuit (26) for the first, lower speed step ("I"),
 and in that the brake circuit (19) is constructed as a power semiconductor and the brake logic (18) switches on the brake circuit (19) to stop the wiper motor (20) in the OFF position ("O") or in the intermittent position ("J") of the stepping switch (13) when it, on the one hand, is supplied with the signal for stopping the wiper motor (20) in the OFF position ("O") or in the intermittent position ("J") of the stepping switch (13) and, on the other hand, is supplied with a signal for attaining the parking position (22, 23) of the wiper, which signal is generated by a contact-free limit-position switching.

2. Control arrangement according to Claim 1, characterised in that the signal for the parking position is generated by a plate cam (21), which is mechanically coupled to the wiper motor (20), especially by a moving permanent magnet (22), and a fixed pickup (23).

3. Control arrangement according to Claim 1 or 2, characterised in that the intermittent wiping operation is achieved by means of a pulse circuit having a low duty cycle, it being possible to connect the switching-on signal through to the wiper motor (20) via a gate circuit (27, 25) and an output stage (24).

4. Control arrangement according to one of the preceding claims, characterised by a locking protection device for the wiper motor (20), which device initially disconnects the output stage (24) if a predetermined motor current is exceeded, without activating the brake circuit (19), and subsequently checks the continued existence of the locking by means of renewed short-term switching on of the output stage (24) at regular time intervals, by means of a clock generator (26, 28).

## Revendications

1. Dispositif de commande d'une installation d'essuie-glace pour des pare-brise ou lunettes de véhicule automobile comportant un moteur électrique d'essuie-glace (20), un dispositif de commutation de fin de course commandé par le moteur d'essuie-glace (20) avec un circuit de freinage (19) pour court-circuiter le moteur (20) et un commutateur à prise (13) avec plusieurs positions pour définir deux vitesses de balayage ("I", "II"), un fonctionnement intermittent ("J") et une position d'arrêt ("0"),
 caractérisé en ce que :
 le moteur d'essuie-glace (20) est relié en permanence à la tension d'alimentation ($U_B$) pour la seconde vitesse de rotation la plus élevée ("II") par l'intermédiaire d'un étage de sortie à semi-conducteurs de puissance (24), alors que pour la première vitesse de rotation plus faible ("I"), le moteur d'essuie-glace (20) est relié à la tension d'alimentation ($U_B$) par un étage de sortie à semi-conducteurs de puissance (24) avec fonctionnement impulsionnel et rapport de travail correspondant commandé par un générateur d'horloge (26),

le commutateur à prise (13) est relié par une seule ligne (14) à une logique de puissance (15) qui détermine les positions de commutation choisies (O, J, I, II) à partir de la valeur de la tension (résistances 10, 11, 12) correspondant à la position du commutateur à prise (13), et commute la ligne de sortie (O, J, I, II) à l'aide d'une logique de sélection (17), ligne qui correspond à la position du commutateur à prise (13) et active soit la seconde vitesse de rotation la plus élevée ("II") du moteur d'essuie-glace (20) soit une logique de frein (18) avec en aval un circuit de freinage (19) pour le moteur d'essuie-glace (20) dans la position arrêt ou un circuit impulsion (26, 28) pour le fonctionnement intermittent ("J") ou le circuit impulsionnel (26) pour la première vitesse de rotation la plus faible ("I"),

et le circuit de freinage (19) est formé par des semiconducteurs de puissance et la logique de freinage (18) met en oeuvre le circuit de freinage (19) pour arrêter le moteur d'essuie-glace (20) dans la position arrêt ("0") ou dans la position de fonctionnement intermittent ("J") du commutateur à prise (13) lorsqu'il reçoit d'une part le signal d'arrêt du moteur d'essuie-glace (20) en position d'arrêt ("0") ou dans la position de fonctionnement intermittent ("J") du commutateur à prise (13) et par ailleurs un signal est fourni à l'essuie-glace pour atteindre la position de rangement (22, 23), signal généré par un circuit de fin de course sans contact.

2. Dispositif de commande selon la revendication 1, caractérisé en ce que le signal correspondant à la position de rangement est généré par un disque de commande (21) couplé mécaniquement au moteur d'essuie-glace (20) en particulier par un aimant permanent (22) mobile avec ce disque et un capteur fixe (23).

3. Dispositif de commande selon la revendication 1 ou 2, caractérisé en ce que le fonctionnement à balayage intermittent est assuré par un circuit impulsionnel à rapport de travail faible et le signal de branchement est transmis au moteur d'essuie-glace (20) par l'intermédiaire d'un circuit de porte (27, 25) et d'un étage de sortie (24).

4. Dispositif de commande selon l'une des revendications précédentes, caractérisé par un dispositif de protection de blocage du moteur d'essuie-glace (20), qui en cas de dépassement d'un courant prédéterminé du moteur coupe tout d'abord l'étage de sortie (24) sans activer le circuit de freinage (19), puis, à l'aide d'un générateur d'horloge (26, 28) contrôle à intervalles réguliers la persistance du blocage par une nouvelle mise en oeuvre de court durée de l'étage de sortie (24).